# EUROPÄISCHE PATENTSCHRIFT

(11) **EP 2 741 905 B1**
(45) Veröffentlichungstag und Bekanntmachung des Hinweises auf die Patenterteilung: **19.08.2015**
(21) Anmeldenummer: 12740352.5
(22) Anmeldetag: 24.07.2012
(51) Int. Cl.: B29C 49/20, F16B 21/07

(54) **BEFESTIGUNG EINES BLASFORMBAUTEILS**
SECURING OF A BLOW-MOULD COMPONENT
FIXATION D'UNE PIÈCE MOULÉE PAR SOUFFLAGE

(30) Priorität: 09.08.2011 DE 102011080663
(43) Veröffentlichungstag der Anmeldung: 18.06.2014
(73) Patentinhaber: Bayerische Motoren Werke Aktiengesellschaft, 80809 München (DE)
(72) Erfinder: HAIN, Roland, 80999 Muenchen (DE); BRANDL, Franz, 92421 Schwandorf (DE); KELEMEN, Ferenc, 80997 München (DE)
(86) Internationale Anmeldenummer: PCT/EP2012/064483
(87) Internationale Veröffentlichungsnummer: WO 2013/020802

(56) Entgegenhaltungen:
- WO-A1-2005/035286
- CA-C- 1 283 385
- US-A1- 2005 097 714
- "DREI AUF EINEN SCHLAG", PLASTVERARBEITER, HUETHIG GMBH, HEIDELBERG, DE, 1. Mai 2008 (2008-05-01), Seiten 28-30, XP001538180, ISSN: 0032-1338

## Beschreibung

Die Erfindung betrifft eine Befestigung eines Blasformbauteils nach dem Oberbegriff des Patentanspruchs 1.

In dem Eintrag "Blasformen" im Online-Lexikon "Wikipedia" vom 04.08.2011 wird dargestellt, dass Blasformbauteile stets Hohlkörper sind. Zu ihrer Herstellung wird zunächst ein Schlauch aus heißem, formbaren Kunststoff senkrecht nach unten extrudiert. Die Materialstärke im Schlauch wird dabei entsprechend der Form des herzustellenden Bauteils geregelt. Anschließend fährt ein Dorn in den Schlauch ein und ein zu diesem Zeitpunkt noch geöffnetes, zweigeteiltes Werkzeug fährt zu und umhüllt den Schlauch mitsamt dem Dorn. Durch den Dorn wird dann Druckluft in den Schlauch gepresst, wodurch dieser aufgeblasen und an die Kontur des Werkzeugs angepresst und abgekühlt wird. Der Kunststoff passt sich so der vorgegebenen Form an und wird fest.

Typische Blasformbauteile sind beispielsweise Flaschen, Kanister oder Fässer. Aber auch technische Bauteile wir Lüftungskanäle, Faltenbälge, Kofferhalbschalen oder Kraftstofftanks lassen sich blasformen.

Zur Befestigung solcher Blasformbauteile ist es üblich, zumindest eine angeformte Lasche vorzusehen. Diese Lasche liegt in der Trennebene zwischen den beiden Werkzeughälften. Dadurch lässt sich die Lasche beim Blasformen gleich mit anformen. Durch die eingeblasene Druckluft wird der plastische Kunststoff in die Aussparung zwischen den beiden Werkzeughälften für die Lasche hineingepresst.

Die Lasche kann eine runde Ausnehmung aufweisen, sodass das Blasformbauteil angeschraubt werden kann. Die Schraube ragt dabei mit ihrem Schaft durch die Ausnehmung hindurch, während der Schraubenkopf an der Lasche anliegt.

Aus dem Artikel "Drei auf einen Schlag" aus der Zeitschrift "Plastikverarbeiter", Huethig GmbH, Heidelberg, Ausgabe Mai 2008, Seite 28 - 30, XP001538180, ISSN 0032-1338 ist ein Verfahren zur Fertigung eines Blasformteils mit einer angeformten Lasche zur Befestigung bekannt.

Aufgabe der Erfindung ist es, eine besonders einfache Befestigungsmöglichkeit für ein Blasformbauteil zu schaffen.

Diese Aufgabe wird mit einer Befestigung eines Blasformbauteils mit den Merkmalen des Patentanspruchs 1 gelöst.

Erfindungsgemäß weist ein Blasformbauteil zur Befestigung an einem Trägerbauteil zumindest eine angeformte Lasche mit einer länglichen Aussparung auf, die von einem Rasthaken an einem Trägerbauteil hintergriffen werden kann. Dabei ist der Rasthaken steifer als die Lasche. Die Steifigkeit beschreibt den Widerstand eines Körpers gegen Verformung durch eine Kraft oder ein Drehmoment. Die Steifigkeit eines Körpers ist abhängig von dessen Werkstoff sowie der Geometrie. Während bisher Blasformbauteile mit einer Lasche nur angeschraubt wurden, ist es nun möglich, Blasformbauteile auch zu verrasten. Dies ist eine wesentlich einfachere und kostengünstigere Befestigungsmöglichkeit. Auch ist die zur Herstellung der Befestigung benötigte Arbeitszeit wesentlich geringer als bei einer Verschraubung.

Bevorzugt besteht der Rasthaken aus einem relativ steifen Material, sodass der Rasthaken praktisch keine Nachgiebigkeit aufweist. Das Material für den Rasthaken kann beispielsweise ein Kunststoff sein, der mit Glasfasern oder Glaskugeln verstärkt ist. Auch kann der Rasthaken einteilig mit dem Trägerbauteil ausgeführt sein. Günstigerweise besteht der Rasthaken zumindest aus einem länglichen Grundkörper, der vom Trägerbauteil absteht. An dem freien Ende des Grundkörpers befindet sich zumindest auf einer Seite eine Rastnase. Eine solche Rastnase ist üblicherweise im Querschnitt gesehen im Wesentlichen dreieckig. Mit einer Seite liegt die Rastnase am Grundkörper an. Die Rastnase wird dabei vom freien Ende des Grundkörpers her zum Trägerbauteil hin immer breiter. Bei der Montage kann sich so der Rasthaken wie ein Keil durch die längliche Ausnehmung in der Lasche hindurch schieben.

Vorteilhafterweise ist die Aussparung schmaler als der Rasthaken im Bereich der Rastnase. Die Rastnase passt somit durch die Aussparung nur dadurch hindurch, dass die die Aussparung umgebenden Randbereiche der Lasche elastisch nachgeben. Dabei ist es wichtig, dass der Rasthaken so steif ist, dass er bei der Montage praktisch nicht nachgibt. Sobald die Rastnase durch die Aussparung hindurch gedrückt ist, gehen die umgebenden Randbereiche der Lasche wieder in ihre Ausgangslage zurück. Dadurch entsteht die gewünschte Hinterrastung des Rasthakens und somit die gewünschte Befestigung. Dies ist eine sehr einfache und damit auch kostengünstige Befestigungsart.

Bevorzugt ragt in Längsrichtung der Aussparung gesehen im mittleren Bereich von einer Längsseite der die Aussparung umgebenden Randbereiche her eine Nippel in die Aussparung hinein. Der Nippel kann günstigerweise einteilig mit der Lasche ausgeführt sein. Er ist auf der Seite der Aussparung angebracht, die der Rastnase des Rasthakens abgewandt ist. Er erhöht zwar den Widerstand beim Durchstecken des Rasthakens durch die Aussparung. Umgekehrt erhöht er aber auch die Belastbarkeit und damit die Sicherheit der Befestigung, wenn er nach dem Durchstecken des Rasthakens wieder elastisch in seine Ausgangslage zurückgekehrt. Dadurch drückt er gegen den Rasthaken und drückt so die hinterrastete Rastnase gegen den die Aussparung umgebenden Randbereich, sodass sich die Hinterrastung nicht versehentlich lösen kann. Dieser Nippel trägt maßgeblich dazu bei, dass die erfindungsgemäße Befestigung prozesssicher herstellbar ist.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine dreidimensionale Ansicht eines blasgeformten Luftführungskanal mit einer angeformten Lasche mit einer länglichen Aussparung,
- Fig. 2: eine vergrößerte Ansicht der in Fig. 1 gezeigten Lasche,
- Fig. 3: ein Trägerbauteil mit einem angeformten Rasthaken und
- Fig. 4: das Trägerbauteil von Fig. 3 mit dem daran befestigten Luftführungskanal von Fig. 1 und 2.

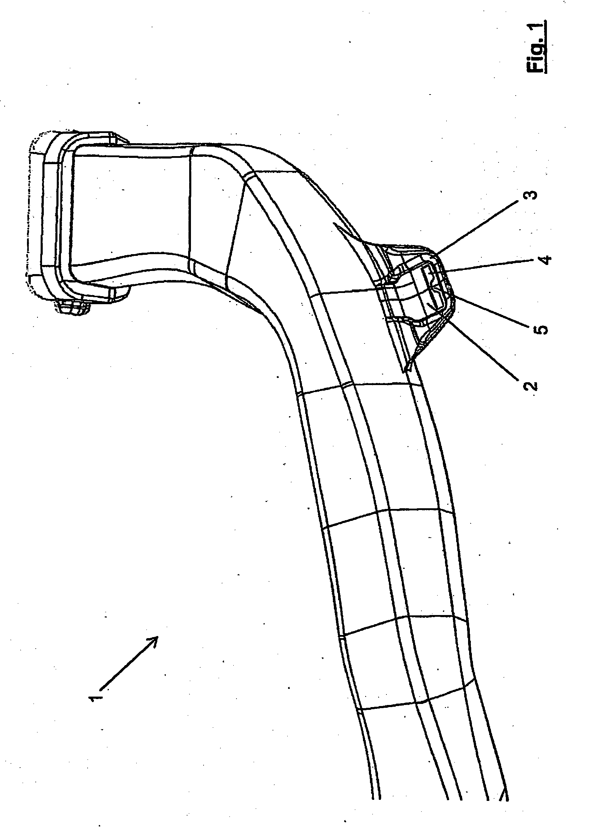

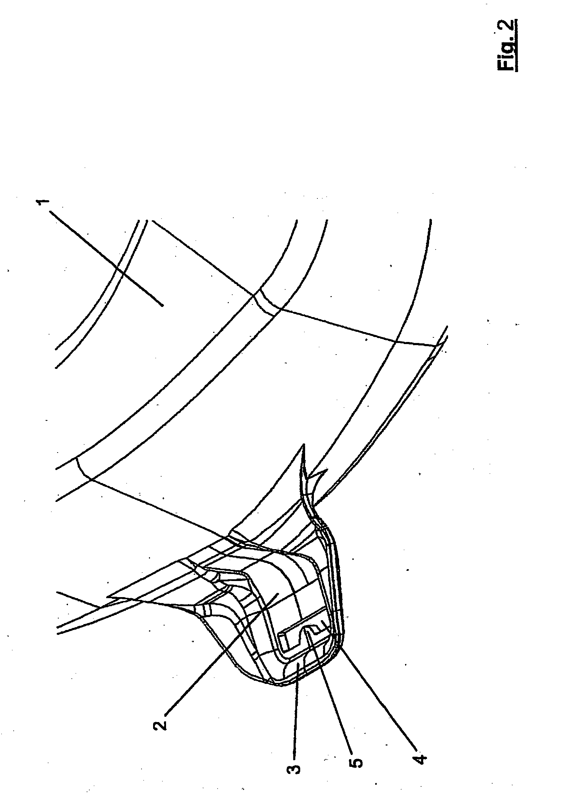

In Fig. 1 und Fig. 2 ist ein Luftführungskanal 1 gezeigt, der in einer Instrumententafel eines Kraftfahrzeugs zur Zuführung der Luft zu Luftaustrittsöffnungen in der Instrumententafel benötigt wird. Ein solcher Luftführungskanal 1 muss keine großen Kräfte aushalten können. Er soll aber möglichst leicht und kostengünstig sein. Daher ist dieser Luftführungskanal 1 dafür prädestiniert, als Blasformbauteil ausgeführt zu werden. Ein blasgeformter Luftführungskanal 1 kann sehr dünne Wandstärken aufweisen, sodass er nur ein geringes Gewicht aufweist. Auch sind die Herstellkosten für einen solchen Luftführungskanal 1 sehr günstig im Vergleich zu allen anderen Herstellverfahren.

Der Luftführungskanal 1 als Blasformbauteil muss an dem Verkleidungsteil der Instrumententafel auf der vom Fahrgastraum nicht sichtbaren Unterseite befestigt werden. Das Verkleidungsteil bildet also das Trägerbauteil, an dem der Luftführungskanal 1 befestigt werden muss.

Zur Befestigung weist der Luftführungskanal 1 zumindest eine einteilig angeformte Lasche 2 auf. Diese Lasche 2 liegt in der Trennebene der Werkzeughälften des Blasform-Werkzeugs, sodass sie einteilig mit angeformt werden kann. Durch das Einpressen der Druckluft in den Kunststoff-Schlauch wird dieser gegen die Werkzeughälften und in die Ausnehmung für die Lasche 2 hineingedrückt.

Die Lasche 2 weist einen äußeren Randbereich 3 auf, der eine größere Wandstärke als der mittlere Bereich der Lasche 2 hat. In dem mittleren Bereich der Lasche 2 befindet sich eine längliche Aussparung 4. In der Längsrichtung der Aussparung 4 gesehen im mittleren Bereich ragt vom die Aussparung 4 umgebenden Randbereich her ein Nippel 5 in die Aussparung 4 hinein. Dieser Nippel 5 hat in etwa die Form eines Halbkreises.

Der gesamte Luftführungskanal 1 mit der angeformten Lasche 2 und dem Nippel 5 besteht einteilig aus einem relativ weichen thermoplastischen Polyurethan.

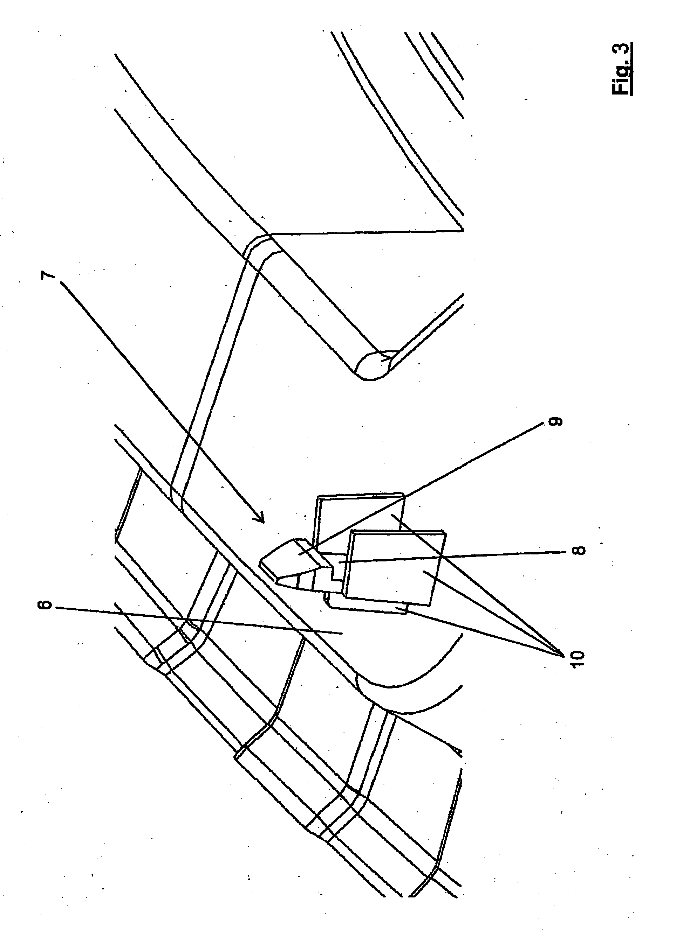

In der Fig. 3 ist das Verkleidungsteil 6 gezeigt, an dem der Luftführungskanal 1 mit der angeformten Lasche 2 befestigbar ist. Das Verkleidungsteil 6 besteht aus einem steifen Polyamid. An dem Verkleidungsteil 6 ist einstückig ein Rasthaken 7 angeformt. Dieser Rasthaken 7 weist einen länglichen Grundkörper 8 auf, der vom Verkleidungsteil 6 nach oben absteht. Am freien, oberen Ende des Grundkörpers 8 ist auf einer Seite eine im Querschnitt gesehen dreieckige Rastnase 9 angeformt. Diese Rastnase 9 wird vom freien Ende des Grundkörpers 8 aus nach unten bis zur "Nasenspitze" keilförmig kontinuierlich breiter. Der Grundkörper 8 ist mit drei Rippen 10 zusätzlich am Verkleidungsteil 6 abgestützt, sodass er auch von der geometrischen Gestaltung her sehr steif ist.

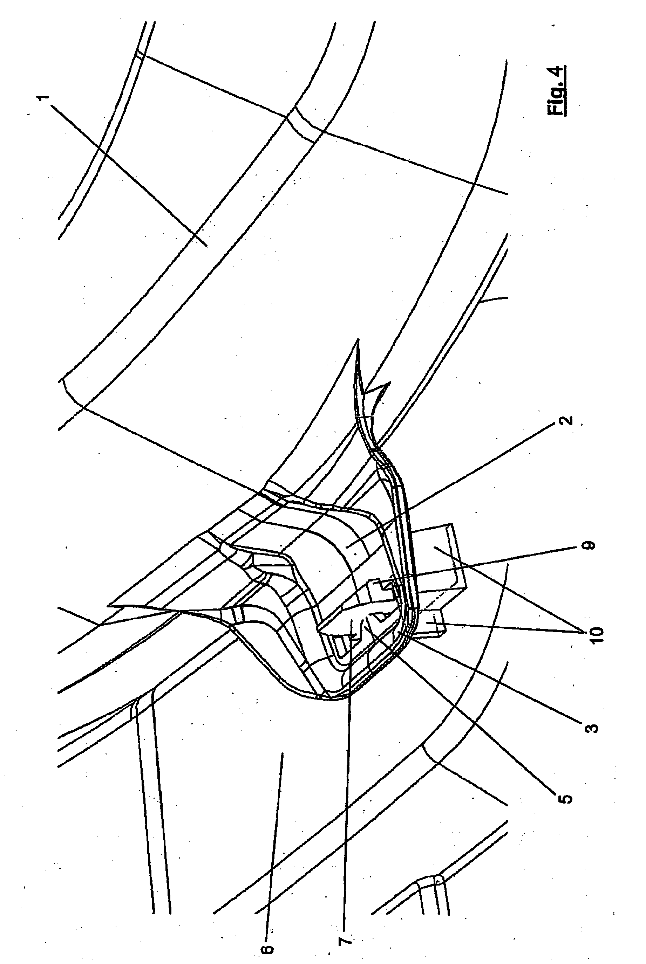

In der Fig. 4 schließlich ist das Verkleidungsteil 6 mit dem daran befestigten Luftführungskanal 1 dargestellt. Gut zu sehen ist, dass die Rastnase 9 den Randbereich der Aussparung 4 formschlüssig hintergreift. Der Nippel 5 liegt leicht elastisch verformt an dem Rasthaken 7 an und drückt diesen gegen den gegenüberliegenden Randbereich der Aussparung 4. Damit verhindert der Nippel 5, dass sich der Luftführungskanal 1 mit der Lasche 2 und der Aussparung 4 versehentlich so relativ zum Rasthaken 7 verlagern kann, dass die Rastnase 9 nicht mehr den Randbereich der Aussparung 4 hintergreift. Dieser Nippel 5 trägt somit wesentlich dazu bei, dass die Befestigung mit dieser einfachen Verrastung auch sicher hält.

Bei der Montage des Luftführungskanals 1 muss etwas Kraft aufgebracht werden, um den Rasthaken 7 durch die Aussparung 4 zu drücken, da der Rasthaken 7 mit der Rastnase 9 breiter als die Aussparung 4 ist. Durch die aufgewendete Kraft werden die die Aussparung 4 umgebenden Randbereiche der Lasche 2 und der Nippel 5 elastisch zur Seite gedrückt, sodass der Rasthaken 7 durch die elastisch aufgeweitete Aussparung 4 hindurch passt. Dabei ist auch die Keilform des oberen Endes des Rasthakens 7 hilfreich. Sobald die besonders breite Rastnase 9 durch die Aussparung 4 hindurch getaucht ist, bewegen sich die elastisch verformten Randbereiche und der Nippel 5 wieder in Richtung ihrer Ausgangslage zurück. Dabei drückt der Nippel 5 gegen den länglichen Grundkörper 8 des Rasthakens 7 auf der der Rastnase 9 abgewandten Seite, sodass sich die Lasche 2 des Luftführungskanals leicht verschiebt und die Rastnase 9 sicher den umgebenden Randbereich der Aussparung 4 hintergreift. Die drei Rippen 10 dienen bei der Montage als Anschlag, sodass die Lasche 2 nicht zu tief über den Rasthaken 7 hinunter gedrückt werden kann. So entsteht auf sehr einfache und schnelle Weise eine sichere Befestigung des blasgeformten Luftführungskanals 1 an dem Verkleidungsteil 6, das hier als Trägerbauteil dient.

Bei der Auslegung der Befestigung ist darauf zu achten, dass der Rasthaken 7 möglichst steif ausgelegt ist, sodass die gesamte erforderliche elastische Nachgiebigkeit praktisch ausschließlich über die entsprechende Auslegung der Lasche 2 gewährleistet ist. Die Auslegung der Breite der Aussparung 4 muss auf die Breite des Grundkörpers 8 und die Breite der Rastnase 9 des Rasthakens 7 abgestimmt sein. Einerseits darf die erforderliche Kraft zur Montage nicht zu hoch sein, um eine ergonomische Montage von Hand gewährleisten zu können und eine Beschädigung der Aussparung 4 bei der Montage ausschließen zu können. Andererseits soll nach der Montage die Befestigung prozesssicher halten. Hierzu kann auch die entsprechende Auslegung der Größe, der Form und der Dicke des Nippels 5 beitragen.

Bisher wurden Blasformbauteile stets mit Trägerbauteilen verschraubt. Erst die erfindungsgemäße Ausführung der Befestigung ermöglicht eine Hinterrastung, die wesentlich kostengünstiger und schneller realisierbar ist.

## Patentansprüche

1. Befestigung eines Blasformbauteils (1) an einem Trägerbauteil (6), wobei das Blasformteil (1) zur Befestigung zumindest eine angeformten Lasche (2) aufweist, **dadurch gekennzeichnet, dass** das Trägerbauteil (6) einen Rasthaken (7) und die Lasche (2) eine längliche Aussparung (4) aufweist, sodass der Rasthaken (7) durch die Aussparung (4) die Lasche (2) hintergreifen kann, wobei der Rasthaken (7) steifer ist als die Lasche (2).

2. Befestigung nach Anspruch 1, **dadurch gekennzeichnet, dass** der Rasthaken (7) aus einem steiferen Material als das Material der Lasche besteht.

3. Befestigung nach Anspruch 2, **dadurch gekennzeichnet, dass** der Rasthaken (7) einen länglichen Grundkörper (8) aufweist, der vom Trägerbauteil (6) absteht, und an dessen freien Ende sich auf zumindest einer Seite eine Rastnase (9) befindet.

4. Befestigung nach Anspruch 2 oder 3, **dadurch gekennzeichnet, dass** die Aussparung (4) schmaler als der Rasthaken (7) im Bereich der Rastnase (9) ist.

5. Befestigung nach Anspruch 4, **dadurch gekennzeichnet, dass** die die Aussparung (4) umgebenden Randbereiche der Lasche (2) elastisch nachgeben können, wenn der Rasthaken (7) mit der Rastnase (9) durch die Aussparung (4) hindurch gedrückt wird.

6. Befestigung nach einem der vorhergehenden Ansprüche, **dadurch gekennzeichnet, dass** in Längsrichtung der Aussparung (4) gesehen im mittleren Bereich von einer Längsseite her eine Nippel (5) in die Aussparung (4) hineinragt

7. Befestigung nach Anspruch 6, **dadurch gekennzeichnet, dass** der Nippel (5) einteilig mit der Lasche (2) ausgeführt Ist.

8. Befestigung nach Anspruch 6 oder 7, **dadurch gekennzeichnet, dass** der Nippel (5) auf der der Rastnase (9) abgewandten Seite des Rasthakens (7) angeordnet ist.

9. Befestigung nach einem der vorhergehenden Ansprüche, **dadurch gekennzeichnet, dass** der äußere Randbereich der Lasche (2) eine größere Wandstärke als der mittlere Bereich der Lasche (2) aufweist, in dem sich die Aussparung (4) befindet.

10. Befestigung nach einem der vorhergehenden Ansprüche, **dadurch gekennzeichnet, dass** die Lasche (2) des Blasform-Bauteils (1) in der Trennebene des Blasform-Werkzeugs liegt.

## Claims

1. A fastening of a blow-moulded component (1) to a carrier component (6), the blow-moulded part (1) having at least one moulded-on tab (2) for fastening, **characterised in that** the carrier component (6) has a latching hook (7) and the tab (2) has an elongate recess (4), so the latching hook (7) can engage behind the tab (2) through the recess (4), the latching hook (7) being more rigid than the tab (2).

2. A fastening according to claim 1, **characterised in that** the latching hook (7) consists of a more rigid material than the material of the tab.

3. A fastening according to claim 2, **characterised in that** the latching hook (7) has an elongate base body (8), which protrudes from the carrier component (6) and on the free end of which, on at least one side, a latching lug (9) is located.

4. A fastening according to claim 2 or claim 3, **characterised in that** the recess (4) is narrower than the latching hook (7) in the region of the latching lug (9).

5. A fastening according to claim 4, **characterised in that** the edge regions of the tab (2) surrounding the recess (4) can yield resiliently when the latching hook (7) with the latching lug (9) is pressed through the recess (4).

6. A fastening according to any one of the preceding claims, **characterised in that**, viewed in the longitudinal direction of the recess (4), a nipple (5) projects into the recess (4) in the central region from a longitudinal side,

7. A fastening according to claim 6, **characterised in that** the nipple (5) is formed in one piece with the tab (2).

8. A fastening according to claim 6 or claim 7, **characterised in that** the nipple (5) is arranged on the side of the latching hook (7) remote from the latching lug (9).

9. A fastening according to any one of the preceding claims, **characterised in that** the outer edge region of the tab (2) has a greater wall thickness than the central region of the tab (2), in which the recess (4) is located.

10. A fastening according to any one of the preceding claims, **characterised in that** the tab (2) of the blow-moulded component (1) is located in the parting plane of the blow mould.

## Revendications

1. Système de fixation d'un élément moulé par soufflage (1) sur un élément-support (6), dans lequel l'élément soufflé (1) comporte, au moins une languette de fixation moulée (2), pour permettre la fixation,
**caractérisée en ce que**
l'élément-support (6) comporte un crochet d'encliquetage (7) tandis que la languette (2) comporte un évidement longitudinal (4) de sorte que le crochet d'encliquetage (7) puisse s'engager derrière la languette (2), au travers de l'évidement (4), le crochet d'encliquetage (7) étant plus rigide que la languette (2).

2. Système de fixation conforme à la revendication 1,
**caractérisé en ce que**
le crochet d'encliquetage (7) est réalisé en un matériau plus rigide que le matériau constitutif de la languette.

3. Système de fixation conforme à la revendication 2,
**caractérisé en ce que**
le crochet d'encliquetage (7) comporte un corps de base longitudinal (8) qui s'éloigne de l'élément-support (6) et à l'extrémité libre duquel est positionné un bec d'encliquetage (9), sur au moins un côté face.

4. Système de fixation conforme à la revendication 2 ou 3,
**caractérisé en ce que**
l'évidement (4) est plus étroit que le crochet d'encliquetage (7) dans la zone du bec d'encliquetage (9).

5. Système de fixation conforme à la revendication 4,
**caractérisé en ce que**
les zones de bord de la languette (2) qui entourent l'évidement (4) peuvent se fléchir élastiquement lorsque le crochet d'encliquetage (7) est poussé avec le bec d'encliquetage (9) au travers de l'évidement (4).

6. Système de fixation conforme à l'une des revendications précédentes,
**caractérisé en ce que**
dans la zone médiane de l'extension longitudinale de l'évidement (4), un téton (5) s'étend d'une face latérale de cet évidement (4), dans la partie interne de celui-ci.

7. Système de fixation conforme à la revendication 6,
**caractérisé en ce que**
le téton (5) est réalisé en une seule pièce avec la languette (2).

8. Système de fixation conforme à la revendication 6 ou 7,
**caractérisé en ce que**
le téton (5) est située sur la face du crochet d'encliquetage (7) située à l'opposé du bec d'encliquetage (9).

9. Système de fixation conforme à l'une des revendications précédentes,
**caractérisé en ce que**
la zone de bord externe de la languette (2) a une épaisseur de paroi supérieure à celle de la zone médiane de cette languette (2) dans laquelle est situé l'évidement (4).

10. Système de fixation conforme à l'une des revendications précédentes,
**caractérisé en ce que**
la languette (2) de l'élément soufflé (1) est située dans le plan de joint de l'outil de soufflage.
